# EUROPÄISCHE PATENTSCHRIFT

(11) **EP 2 283 719 B1**
(45) Veröffentlichungstag und Bekanntmachung des Hinweises auf die Patenterteilung: **14.06.2017**
(21) Anmeldenummer: 10170067.2
(22) Anmeldetag: 20.07.2010
(51) Int. Cl.: A01B 59/06, A01B 63/02

(54) **Anordnung zur seitlichen verstellbaren Anbringung eines landwirtschaftlichen Arbeitsgeräts an einem Fahrzeug**
Assembly for attaching a laterally adjustable agricultural tool to a vehicle
Agencement pour l'installation réglable latéralement d'un appareil agricole sur un véhicule

(30) Priorität: 10.08.2009 DE 102009028409
(43) Veröffentlichungstag der Anmeldung: 16.02.2011
(73) Patentinhaber: Deere & Company, Moline, IL 61265 (US)
(72) Erfinder: Meyer, Axel, 65207, Wiesbaden (DE)
(74) Vertreter: Holst, Sönke

(56) Entgegenhaltungen:
- EP-A2- 1 243 171
- US-A- 5 941 317
- US-B1- 7 054 731
- US-B2- 7 162 348
- US-B2- 7 460 942

## Beschreibung

Die Erfindung betrifft eine Anordnung zur seitlich verstellbaren Anbringung eines landwirtschaftlichen Arbeitsgeräts an einem Fahrzeug, umfassend:
ein erstes Element, das an einer Dreipunktkupplung des Fahrzeugs anbringbar ist,
ein zweites Element, das gegenüber dem ersten Element in einer horizontalen und quer zur Vorwärtsrichtung verlaufenden Richtung verschiebbar gelagert, gegenüber dem ersten Element mittels eines fremdkraftbetätigten Aktors in der horizontalen und quer zur Vorwärtsrichtung verlaufenden Richtung bewegbar und an dem das Arbeitsgerät lösbar anbringbar ist,
wobei das erste Element breiter als das zweite Element ist
und der Aktor im Betrieb basierend auf Positionssignalen und einer Sollweginformation derart ansteuerbar ist, dass das zweite Element mit dem Arbeitsgerät entlang eines Sollwegs geführt wird.

### Stand der Technik

Bei landwirtschaftlichen Arbeitsgeräten, die beispielsweise zur Bodenbearbeitung, zum Düngen, Mähen oder ähnlichen landwirtschaftlichen Arbeitsvorgängen dienen und mittels eines Traktors über ein Feld bewegt werden, ist in vielen Fällen eine seitliche Verstellung des Arbeitsgeräts gegenüber dem Traktor sinnvoll, um zu erreichen, dass das Arbeitsgerät auf einem Sollweg geführt wird, während der Traktor aus unterschiedlichen denkbaren Gründen von dem Sollweg abweichen kann, beispielsweise aufgrund ungünstiger Bodeneigenschaften oder an einem Seitenhang oder durch Unaufmerksamkeit des ihn lenkenden Bedieners.

Diese seitliche Verstellung erfolgt im Stand der Technik beispielsweise gemäß der US 7 162 348 B2 durch einen traktorseitigen Zugbalken, der an seinem vorderen Ende um die Hochachse schwenkbar angelenkt ist und durch an seinen beiden Seiten angeordnete Hydraulikzylinder in seitlicher Richtung bewegt wird. Am rückwärtigen Ende des Zugbalkens ist eine Deichsel des Arbeitsgeräts angebracht. Die aktuelle Position des Traktors wird mittels einer an seinem Dach befestigten DGPS-Antenne erfasst und die Hydraulikzylinder werden derart angesteuert, dass das Arbeitsgerät auf dem beabsichtigten Sollweg geführt wird, wozu Rückkopplungssignale von einem Potentiometer zur Erfassung der Position eines der Hydraulikzylinder verwendet werden. Diese Anordnung, bei der die Deichsel des Arbeitsgeräts um die Hochachse schwenkbar am Zugbalken angebracht wird, eignet sich nur für Arbeitsgeräte, die sich selbst auf dem Boden abstützen, sei es durch Räder oder ihre Bodenbearbeitungswerkzeuge.

Eine andere Anordnung zur seitlichen Verstellung eines landwirtschaftlichen Arbeitsgeräts ist in der US 7 460 942 B2 beschrieben. Dort umfasst das Arbeitsgerät ein erstes Element, das an der Dreipunktkupplung des Traktors montiert wird. Ein zweites Element des Arbeitsgeräts trägt die Bodenbearbeitungswerkzeuge und ist durch Parallelogrammlenker mit dem ersten Element verbunden. Ein zwischen dem ersten und dem zweiten Element angeordneter Hydraulikzylinder dient zur seitlichen Verstellung des zweiten Elements. Er wird basierend auf Signalen von zwei GPS-Antennen angesteuert, von denen eine am Traktor oder am ersten Element befestigt ist und die andere am zweiten Element befestigt ist. Bei dieser Anordnung ist als nachteilig anzusehen, dass der Hydraulikzylinder und zumindest die am zweiten Element angebrachte GPS-Antenne nur für ein einziges Arbeitsgerät verwendet werden können.

Die als gattungsbildend angesehene US 7 054 731 B1 beschreibt einen Traktor mit einem gezogenen Gerät, das an einer Kupplung angehängt ist, die durch einen Aktor gegenüber einem sich in Querrichtung erstreckenden Haltebalken in dessen Längsrichtung verstellbar ist. Die Ansteuerung des Aktors erfolgt derart, dass sich das Gerät auf einem Sollweg bewegt. Der Haltebalken ist durch drei Streben mit dem Traktor verbunden.

Schließlich sei noch auf den Stand der Technik gemäß der DE 82 33 213 U1 verwiesen, der sich auf die Anbringung eines Kreiselmähwerks an einem Kleinschlepper bezieht, die einen zweiteiligen Rahmen umfasst. Ein erster Teil des Rahmens ist an einem in vertikaler Richtung verstellbaren Parallelogrammgestänge des Kleinschleppers befestigt und der zweite, fest mit dem Kreiselmähwerk verbundene Teil des Rahmens mittels eines Hydraulikzylinders in seitlicher Richtung gegenüber dem ersten Teil verschiebbar, um Flächen seitlich des Schleppers mähen zu können und Pfosten, Bäumen und ähnlichen Hindernissen ausweichen zu können, ohne eine als nachteilig angesehene Schwenkbewegung durchzuführen.

### Aufgabe

Das der Erfindung zugrunde liegende Problem wird darin gesehen, eine Anordnung zur seitlich verstellbaren Anbringung eines landwirtschaftlichen Arbeitsgeräts an einem Trägerfahrzeug bereitzustellen, die sich universell für unterschiedliche Typen von Arbeitsgeräten einsetzen lässt.

### Lösung

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Anordnung zur seitlich verstellbaren Anbringung eines landwirtschaftlichen Arbeitsgeräts an einem Fahrzeug setzt sich aus einem ersten Element, das an einer Dreipunktkupplung des Fahrzeugs anbringbar ist und einem zweiten Element zusammen, an dem das Arbeitsgerät abnehmbar anbringbar ist. Das zweite Element ist mittels eines fremdkraftbetätigten Aktors gegenüber dem ersten Element in der horizontalen und quer zur Vorwärtsrichtung verlaufenden Richtung verschiebbar. Der Aktor ist basierend auf Positionssignalen und einer Sollweginformation derart ansteuerbar, dass das zweite Element mit dem Arbeitsgerät entlang eines Sollwegs geführt wird. Die Dreipunktkupplung kann sich an der Vorder- oder Rückseite des Fahrzeugs befinden. Das Fahrzeug kann selbst angetrieben sein, insbesondere ein Traktor, oder es wird durch ein anderes Fahrzeug über ein Feld bewegt.

Durch die lösbare Anbringung des Arbeitsgeräts am zweiten Element kann die erfindungsgemäße Anordnung zur Anbringung von beliebigen Arbeitsgeräten verwendet werden. Die verschiebbare Anbringung des zweiten Elements gegenüber dem ersten Element hat gegenüber der im Stand der Technik bekannten Verschwenkung um die Hochachse den Vorteil, dass keine Bewegung des Arbeitsgeräts in der Vorwärtsrichtung mehr stattfindet, die in vielen Fällen als nachteilig anzusehen ist.

Das zweite Element ist zur Anbringung von unterschiedlichen Kupplungseinrichtungen von Arbeitsgeräten ausgelegt, wozu eine untere, sich horizontal und quer zur Vorwärtsrichtung erstreckende Schiene vorgesehen ist, an der ein oder mehrere Unterlenker-Koppelpunkte und/oder ein Zugmaul und/oder eine Kugelkopfkupplung und/oder ein Zugpendel und/oder eine Ackerschiene in seitlicher Richtung verstellbar anbringbar ist oder sind. Die erwähnten Kupplungseinrichtungen umfassen zweckmäßigerweise einen Abschnitt, der die Schiene umgreift oder zumindest hintergreift. Das zweite Element weist außerdem einen oberen Kopplungspunkt auf, an dem ein Oberlenker mit fester oder (manuell oder hydraulisch) verstellbarer Länge anbringbar ist, um die Position des Arbeitsgeräts verstellen zu können.

Das erste Element und das zweite Element umfassen jeweils einen Rahmen, dessen Form vorzugsweise zumindest näherungsweise rechteckig ist und dessen Ecken rechteckig oder abgerundet sein können. Das erste Element ist breiter als das zweite Element, das durch den Aktor entlang des ersten Elements in seitlicher Richtung verschoben wird. Die Rahmen lassen vorzugweise hinreichenden Platz für den Durchtritt einer Zapfwelle frei.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines landwirtschaftlichen Zugfahrzeugs in Form eines Traktors mit einem landwirtschaftlichen Arbeitsgerät in Form eines Bodenbearbeitungsgeräts, das mittels einer erfindungsgemäßen Anordnung an der Dreipunktkupplung des Traktors befestigt ist,
- Fig. 2: eine perspektivische Ansicht der Anordnung von hinten, und
- Fig. 3: eine perspektivische Ansicht der Anordnung von vorn.

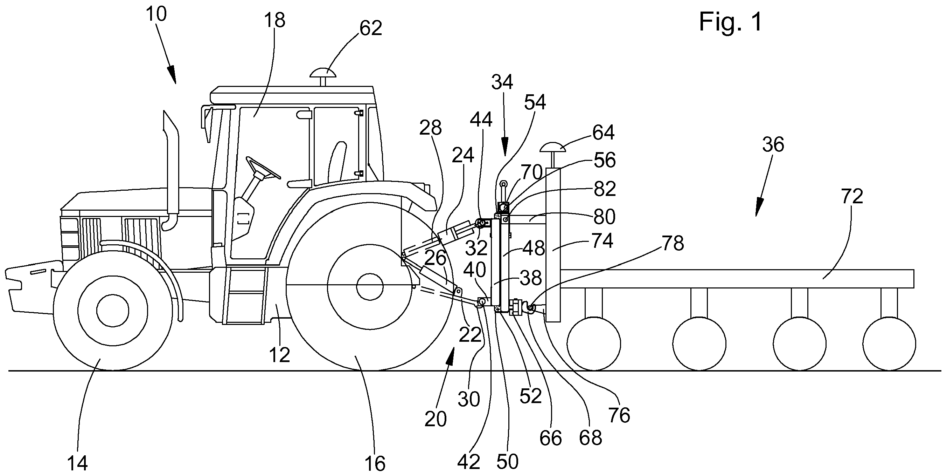

In der Figur 1 ist ein Fahrzeug 10 in Form eines landwirtschaftlichen Traktors dargestellt, das sich auf einem Rahmen 12 aufbaut und durch vordere, lenkbare Räder 14 und antreibbare, rückwärtige Räder 16 auf dem Boden abstützt. Der Bedienerarbeitsplatz befindet sich in einer Kabine 18. Am rückwärtigen Ende des Rahmens ist eine Dreipunktkupplung 20 angeordnet, die sich aus zwei nebeneinander angeordneten Unterlenkern 22 und einem Oberlenker 28 zusammensetzt. Die Unterlenker 22 sind durch Hydraulikzylinder 26 höhenverstellbar. Der Oberlenker 28 ist durch einen Hydraulikzylinder 24 längenveränderbar ist. Durch Verstellung der Hydraulikzylinder 26 kann die Arbeitshöhe eines Arbeitsgerätes 36 verändert werden. Durch Verstellung der Länge des Oberlenkers 28, die anstelle durch den Hydraulikzylinder 24 auch rein mechanisch durch den Bediener von Hand mittels geeigneter Schraubspindeln erfolgen könnte, ist der Neigungswinkel des Arbeitsgeräts 36 verstellbar. Am rückwärtigen Ende der Unterlenker 22 sind in an sich bekannter Weise Unterlenker-Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1 : Kategorien 1, 2, 3 und 4 beschrieben werden) angeordnet, während am rückwärtigen Ende des Oberlenkers 28 ein ebenfalls konventioneller Oberlenker-Koppelpunkt 32 vorgesehen ist.

An der Dreipunktkupplung 20 ist eine Anordnung 34 zur seitlich verstellbaren Anbringung eines landwirtschaftlichen Arbeitsgeräts 36 abnehmbar befestigt. Die Anordnung 34 umfasst ein rahmenförmiges erstes Element 38, das durch untere Laschen 40 und Bolzen 42 an den Unterlenker-Kopplungspunkten 30 der Unterlenker 22 und durch ein oberes Halterungselement 44 und einen Bolzen 44 am Oberlenker-Koppelpunkt 32 befestigt ist. Weiterhin umfasst die Anordnung 34 ein rahmenförmiges zweites Element 48, dessen quer zur Vorwärtsrichtung des Fahrzeugs gemessene Breite kleiner als die des ersten Elements 38 ist. Das zweite Element 48 stützt sich durch eine untere Halterung 50, die eine mit dem ersten Element 38 verbundene, an dessen Unterseite befestigte, stangenförmige Halterung 52 von unten und vorn umgreift, sowie eine obere Halterung 54, die eine mit dem ersten Element 38 verbundene, an dessen Oberseite befestigte, stangenförmige Halterung 56 von oben und vorn umgreift, am ersten Element 38 ab. Zwischen den Halterungen 52 und 56 einerseits und den Halterungen 50 und 54 andererseits könnten auch noch Wälzlager oder andere reibungsmindernde Elemente, wie Kunststoffschichten, eingebaut werden, um die Reibung zu vermindern.

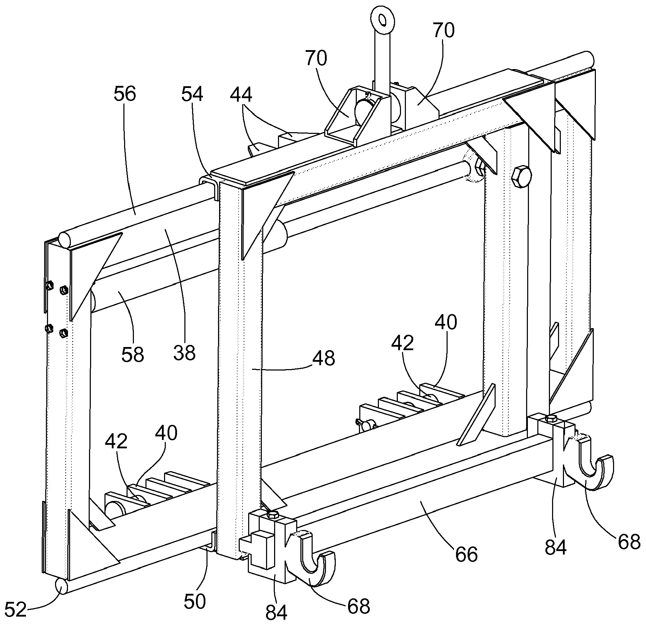

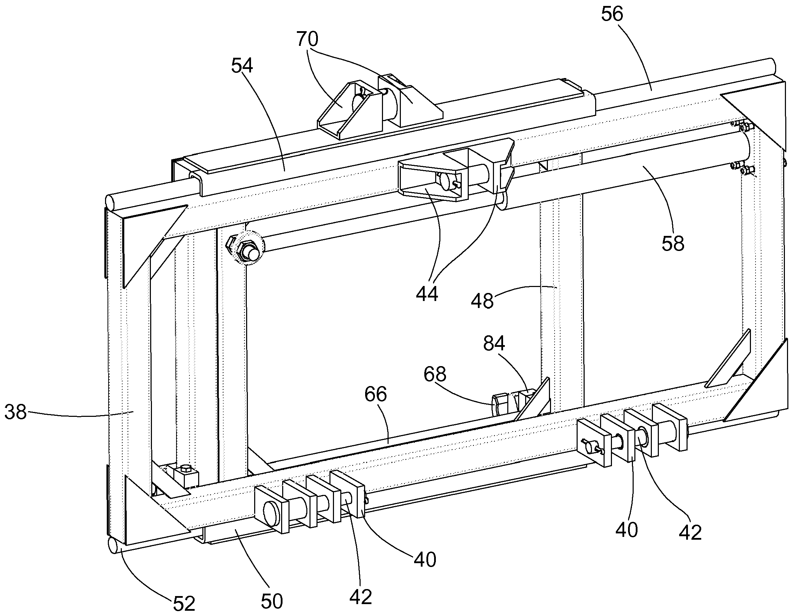

Das zweite Element 48 ist gegenüber dem ersten Element 38 mittels eines sich im oberen Bereich der Anordnung 34 zwischen den Elementen 38, 48 erstreckenden Aktors 58 in Form eines Hydraulikzylinders (vgl. Figuren 2 und 3) in seitlicher Richtung (d. h. horizontal und quer zur Vorwärtsrichtung des Fahrzeugs 10) verschiebbar. Dazu ist der Aktor 58 mit einer Steuerung verbunden, die ihn basierend auf einer in einem Speicher der Steuerung abgelegten Sollwegkarte, Positionsinformationen von einer auf dem Dach der Kabine 18 angebrachten Antenne 62 zum Empfang von Signalen von Satelliten eines globalen Positionierungssystems (z. B. GPS) und einem vorzugsweise im Gehäuse des Aktors 58 eingebauten Sensors (nicht gezeigt) zur Erfassung der Position des Aktors 58 und/oder einer am Arbeitsgerät 36 angebrachten Antenne 62 zum Empfang von Signalen von Satelliten eines globalen Positionierungssystems derart ansteuert, dass das Arbeitsgerät 36 entlang des Sollwegs bewegt wird. Die Lenkung des Fahrzeugs 10 kann ebenfalls selbsttätig durch die Steuerung oder durch dessen Fahrer bewerkstelligt werden. Einzelheiten der Ansteuerung des Aktors 58 können den Schriften US 7 162 348 B2 und US 7 460 942 B2 entnommen werden, deren Offenbarung durch Verweis mit in die vorliegenden Unterlagen aufgenommen wird. Die Information über die aktuelle Position des Fahrzeugs 10 und/oder des Arbeitsgeräts 36 könnte auch durch eine Kamera oder einen Laser-Scanner bereitgestellt werden, der das Feld vor dem Fahrzeug abtastet. Bei einer anderen Ausführungsform, die insbesondere bei Mähwerken sinnvoll ist, wird die Sollweginformation durch Lenksignale des Fahrzeugs definiert und die Positionssignale werden anhand des oben erwähnten, die Position des zweiten Elements gegenüber der ersten Element erfassenden Sensors (nicht gezeigt) erzeugt, um zu erreichen, dass möglichst wenig Überlappung und ungemähtes Material bei vorn und hinten am Fahrzeug angebrachten Mähwerken erzielt wird. Hierzu sei auf die Offenbarung der EP 1 321 027 A1 verwiesen, deren Offenbarung durch Verweis mit in die vorliegenden Unterlagen aufgenommen wird. Weiterhin kann die Steuerung mittels der Hydraulikzylinder 26 und 24 auch die Arbeitshöhe des Arbeitsgeräts 36 kontrollieren, sei es ortsspezifisch anhand der Sollwegkarte oder nur im Vorgewende.

Das zweite Element 48 umfasst an seinem unteren Ende eine Schiene 66, an der Unterlenker-Koppelpunkte 68 lösbar und in seitlich verschiebbarer Weise angebracht sind, was durch die Schiene 66 ganz oder teilweise umschließende Befestigungselemente 84 (vgl. Figur 2) erfolgt, da die Schiene 66 im Abstand vom zweiten Element 48 angebracht ist. Außerdem umfasst das zweite Element 48 an seinem oberen Ende einen oberen Kopplungspunkt 70. Das Arbeitsgerät 36 umfasst einen Rahmen 72 mit einem an seinem vorderen Bereich montierten, sich vertikal erstreckenden Tragrahmen 74. Der Tragrahmen 74 ist an seinem unteren Ende mit Streben 76 verbunden, die wiederum durch Bolzen 78 in die Unterlenker-Kopplungspunkte 68 eingreifen und sich daran abstützen. Weiterhin ist der Tragrahmen 74 an seinem oberen Ende mit einem Oberlenker 80 verbunden, der wiederum durch einen Bolzen 82 am oberen Kopplungspunkt 70 festgelegt ist. Anstelle des dargestellten Oberlenkers 80 mit fester Länge könnte auch ein manuell oder hydraulisch längenverstellbarer Oberlenker verwendet werden.

Nach alledem ist offensichtlich, dass die erfindungsgemäße Anordnung 34 zur seitlich verstellbaren Anbringung des Arbeitsgeräts 36 zwischen den Dreipunkt-Schnittstellen des Fahrzeugs 10 und des Arbeitsgeräts 36 eingefügt wird und eine automatische seitliche Verstellung des Arbeitsgeräts 36 gegenüber dem Fahrzeug 10 ermöglicht, um das Arbeitsgerät 36 auf einem Sollweg zu führen. Die Schiene 66 ermöglicht es jedoch auch, anstelle der Unterlenker-Kopplungspunkte 68 beliebige andere Befestigungsmittel für Arbeitsgeräte anzubringen, zum Beispiel ein Zugmaul, eine Kugelkopfkupplung, ein Zugpendel oder eine Ackerschiene (nicht gezeigt). Weiterhin hat die Rahmenform der Elemente 38, 48 den Vorteil, dass bei Bedarf eine Zapfwelle (nicht gezeigt) durch sie hindurchführbar ist, um ein antreibbares Arbeitsgerät damit anzutreiben.

## Patentansprüche

1. Anordnung (34) zur seitlich verstellbaren Anbringung eines landwirtschaftlichen Arbeitsgeräts (36) an einem Fahrzeug (10), umfassend:
ein erstes Element (38), das an einer Dreipunktkupplung (20) des Fahrzeugs (10) anbringbar ist,
ein zweites Element (48), das gegenüber dem ersten Element (38) in einer horizontalen und quer zur Vorwärtsrichtung verlaufenden Richtung verschiebbar gelagert, gegenüber dem ersten Element (38) mittels eines fremdkraftbetätigten Aktors (58) in der horizontalen und quer zur Vorwärtsrichtung verlaufenden Richtung bewegbar und an dem das Arbeitsgerät (36) lösbar anbringbar ist,
wobei das erste Element (38) breiter als das zweite Element (48) ist
und der Aktor (58) im Betrieb basierend auf Positionssignalen und einer Sollweginformation derart ansteuerbar ist, dass das zweite Element (48) mit dem Arbeitsgerät (36) entlang eines Sollwegs geführt wird,
**dadurch gekennzeichnet, dass** das erste Element (38) und das zweite Element (48) jeweils einen rechteckigen Rahmen mit vertikalen Streben und horizontalen Streben umfassen, die an rechteckigen oder abgerundeten Ecken miteinander verbunden sind,
dass die untere und obere horizontale Strebe eines der Elemente (38, 48) mit einem Abschnitt (50, 54) verbunden ist, der jeweils eine an der unteren und oberen horizontale Strebe angebrachte Halterung (52, 56) des anderen Elements (48, 38) umgreift,
dass an der oberen horizontalen Strebe des ersten Elements (38) ein oberes Halteelement (44) zur Aufnahme eines Oberlenker-Koppelpunktes eines Oberlenkers (28) der Dreipunktkupplung (20) und an der unteren Strebe des ersten Elements zwei untere Laschen (40) und Bolzen (42) zur Anbringung eines Unterlenker-Kopplungspunktes (30) eines Unterlenkers (22) der Dreipunktkupplung (20) befestigt sind,
dass das zweite Element (48) eine untere, sich horizontal und quer zur Vorwärtsrichtung erstreckende Schiene (66) umfasst, an der ein oder mehrere Unterlenker-Koppelpunkte (68) und/oder ein Zugmaul und/oder eine Kugelkopfkupplung und/oder ein Zugpendel und/oder eine Ackerschiene in seitlicher Richtung verstellbar anbringbar ist oder sind,
und dass das zweite Element (48) einen oberen Kopplungspunkt (70) umfasst, an dem ein Oberlenker (80) anbringbar ist.

2. Anordnung (34) nach Anspruch 1, **dadurch gekennzeichnet, dass** die Rahmen hinreichenden Platz für den Durchtritt einer Zapfwelle freilassen.

3. Anordnung (34) nach einem der Ansprüche 1 oder 2, **dadurch gekennzeichnet, dass** die Sollweginformation eine in einem Speicher einer Steuerung abgelegte Sollwegkarte ist und dass die Positionssignale anhand eines Signale von Satelliten empfangenden Positionsbestimmungssystems oder durch eine Kamera oder einen das Feld vor dem Fahrzeug abtastenden Laser-Scanner erzeugt werden.

4. Anordnung (34) nach einem der Ansprüche 1 oder 2, **dadurch gekennzeichnet, dass** die Sollweginformation durch Lenksignale des Fahrzeugs definiert ist und dass die Positionssignale anhand eines die Position des zweiten Elements (48) gegenüber der ersten Element (38) erfassenden Sensors erzeugt werden.

## Claims

1. Assembly (34) for the laterally adjustable attachment of an agricultural tool (36) to a vehicle (10), comprising:
a first element (38), which can be attached to a three-point coupling (20) of the vehicle (10),
a second element (48), which is mounted such that it can be displaced with respect to the first element (38) in the direction running horizontally and transversely with respect to the forward direction, can be moved with respect to the first element (38) by means of an external force-operated actuator (58) in the direction running horizontally and transversely with respect to the forward direction, and to which the tool (36) can be detachably attached,
the first element (38) being wider than the second element (48)
and the actuator (58) can be driven during operation on the basis of position signals and an item of intended path information in such a way that the second element (48) with the tool (36) is guided along an intended path,
**characterized in that** the first element (38) and the second element (48) each comprise a rectangular frame with vertical struts and horizontal struts, which are connected to one another at rectangular or rounded corners,
**in that** the lower and upper horizontal struts of one of the elements (38, 48) are connected to a section (50, 54) which in each case engages around a holder (52, 56) of the other element (48, 38), which is attached to the lower and upper horizontal struts,
**in that** an upper holding element (44) for holding an upper link coupling point of an upper link (28) of the three-point coupling (20) is fixed to the upper horizontal strut of the first element (38), and two lower lugs (40) and pins (42) for attachment to a lower link coupling point (30) of a lower link (22) of the three-point coupling (20) are fixed to the lower strut of the first element,
**in that** the second element (48) comprises a lower rail (66) extending horizontally and transversely with respect to the forward direction, to which one or more lower link coupling points (68) and/or a towing jaw and/or a ball head coupling and/or a drawbar and/or a tractor drawbar is or are attachable such that they can be adjusted in the lateral direction,
and **in that** the second element (48) comprises an upper coupling point (70), to which an upper link (80) can be attached.

2. Assembly (34) according to Claim 1, **characterized in that** the frame leaves sufficient space free for a power take-off shaft to pass through.

3. Assembly (34) according to either of Claims 1 and 2, **characterized in that** the intended path information is an intended path map stored in a memory of a control system, and **in that** the position signals are generated by using a position determination system receiving signals from satellites or by a camera or by a laser scanner scanning the field in front of the vehicle.

4. Assembly (34) according to either of Claims 1 and 2, **characterized in that** the intended path information is defined by steering signals from the vehicle, and **in that** the position signals are generated by using a sensor detecting the position of the second element (48) with respect to the first element (38).

## Revendications

1. Ensemble (34) permettant d'installer de manière ajustable dans la direction latérale un appareil (36) de travail agricole sur un véhicule (10), l'ensemble comprenant :
un premier élément (38) qui peut être placé sur un accouplement trois points (20) du véhicule (10),
un deuxième élément (48) qui est monté à coulissement par rapport au premier élément (38) dans une direction horizontale et dans une direction qui s'étend transversalement par rapport à la direction d'avancement, qui peut être déplacé par rapport au premier élément (38) dans une direction horizontale et une direction qui s'étend transversalement par rapport à la direction d'avancement au moyen d'un actionneur (58) activé par une force extérieure, et sur lequel l'appareil de travail (36) peut être placé de manière libérable,
le premier élément (38) étant plus large que le deuxième élément (48),
l'actionneur (58) pouvant être commandé en fonctionnement sur la base de signaux de position et d'une information de parcours de consigne de telle sorte que le deuxième élément (48) soit guidé avec l'appareil de travail (36) le long d'un parcours de consigne, **caractérisé en ce que**
le premier élément (38) et le deuxième élément (48) comprennent chacun un bâti rectangulaire présentant des montants verticaux et des montants horizontaux reliés les uns aux autres en des sommets rectangulaires ou arrondis,
**en ce que** le montant horizontal inférieur et le montant horizontal supérieur d'un des éléments (38, 48) sont reliés à une partie (50, 54) qui chevauche un support (52, 56) de l'autre élément (48, 38) placé sur le montant horizontal inférieur et le montant horizontal supérieur,
**en ce qu'**un élément supérieur de maintien (44) qui reprend un point d'accouplement d'un bras supérieur (28) de l'accouplement trois points (20) est fixé sur le montant horizontal supérieur du premier élément (38) et **en ce que** deux pattes (40) et composants inférieurs (42) permettant de placer un point d'accouplement (30) d'un bras inférieur (22) de l'accouplement trois points (20) sont fixés sur le montant inférieur du premier élément,
**en ce que** le deuxième élément (48) comporte un rail inférieur qui s'étend à l'horizontale et transversalement par rapport à la direction d'avancement et sur lequel un ou plusieurs points d'accouplement (68), une mâchoire de traction, un accouplement à tête sphérique, un pendule de traction et/ou une barre d'attelage peuvent être placés d'une manière ajustable dans la direction latérale et
**en ce que** le deuxième élément (48) comporte un point supérieur d'accouplement (70) sur lequel un bras supérieur (80) peut être placé.

2. Ensemble (34) selon la revendication 1, **caractérisé en ce que** les bâtis laissent suffisamment de place pour le passage de l'arbre d'une prise de force.

3. Ensemble (34) selon l'une des revendications 1 ou 2, **caractérisé en ce que** l'information concernant le parcours de consigne est une carte de parcours de consigne conservée dans la mémoire d'une commande et **en ce que** les signaux de position sont formés à l'aide d'un système de détermination de position qui reçoit des signaux de satellites, par une caméra ou par un scanner laser qui palpe le champ en avant du véhicule.

4. Ensemble (34) selon l'une des revendications 1 ou 2, **caractérisé en ce que** l'information de parcours de consigne est définie par des signaux de guidage du véhicule et **en ce que** les signaux de position sont formés à l'aide d'un capteur qui saisit la position du deuxième élément (48) par rapport au premier élément (38).
